(19) **Europäisches Patentamt / European Patent Office / Office européen des brevets**

(11) **EP 3 961 789 A1**

(12) **EUROPEAN PATENT APPLICATION**
published in accordance with Art. 153(4) EPC

(43) Date of publication:
**02.03.2022 Bulletin 2022/09**

(21) Application number: **20783064.7**

(22) Date of filing: **06.04.2020**

(51) International Patent Classification (IPC):
**H01M 10/613** (2014.01)   **H01M 10/625** (2014.01)
**H01M 10/647** (2014.01)   **H01M 10/6556** (2014.01)
**H01M 10/6567** (2014.01)   **H01M 10/658** (2014.01)
**H01M 8/04701** (2016.01)   **F16L 59/02** (2006.01)

(52) Cooperative Patent Classification (CPC):
**F16L 59/02; H01M 8/04701; H01M 10/613;
H01M 10/625; H01M 10/647; H01M 10/6556;
H01M 10/6567; H01M 10/658;** Y02E 60/10;
Y02E 60/50; Y02P 70/50

(86) International application number:
**PCT/JP2020/015580**

(87) International publication number:
**WO 2020/204209 (08.10.2020 Gazette 2020/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.04.2019   JP 2019072936**

(71) Applicant: **Denka Company Limited
Chuo-ku
Tokyo 103-8338 (JP)**

(72) Inventors:
• **MIZUTA, Kohei**
  **Tokyo 103-8338 (JP)**
• **TABARA, Kazuto**
  **Tokyo 103-8338 (JP)**
• **SAKAWA, Seiichi**
  **Tokyo 103-8338 (JP)**

(74) Representative: **Mewburn Ellis LLP
Aurora Building
Counterslip
Bristol BS1 6BX (GB)**

(54) **HEAT-BLOCKING MATERIAL COMPOSITION, HEAT-BLOCKING MATERIAL, AND METHOD FOR MANUFACTURING SAME**

(57)   A heat insulating material composition, comprising: a composite in which cellulose microfibrils enclose wet silica particles having an average particle diameter of 1 $\mu$m or more and 50 $\mu$m or less.

[Figure 3]

EP 3 961 789 A1

**Description**

Technical Field

The present invention relates to a heat insulating material composition and a heat insulating material that can be manufactured using the composition.

Background Art

In order to suppress heat dissipation energy from the viewpoint of energy saving, demand for heat insulating materials has grown more and more in recent years. The heat insulating materials have received attention not only in use applications such as conventional houses, pipes, blast furnaces and electric furnaces but also from the viewpoint of heat retention of, for example, internal combustion engines and fuel cells, and heat insulating materials applicable to various shapes not limited to formed bodies are required.

Moreover, attention to electric vehicles without relying on petroleum energy has increased, and particularly in recent years, spread of them has been rapidly promoted. As a battery mounted on this electric vehicle, one constituted of a plurality of secondary battery cells is generally used, but since the energy density of a secondary battery cell has been increased in recent years, there is a risk of thermal runaway. Since the secondary battery cell having undergone thermal runaway exhibits sharp temperature rise such that the temperature reaches 300°C or higher depending on circumstances, heat is transferred to an adjacent secondary battery cell, and thermal runaway may occur in a chain reaction. On this account, a member that suppresses influence of thermal runaway on another cell when a secondary battery cell at one place undergoes thermal runaway is required. Furthermore, in an electric vehicle, there is no room for the loading volume for the member, and the mass of the member needs to be low, but materials meeting such requirements are developing.

As a technique to suppress this chain reaction of thermal runaway, a structure in which a thermal runaway prevention wall made of a heat insulating plastic is provided between adjacent secondary batteries to prevent thermal runaway from inducing thermal runaway of another secondary battery is described in Patent Literature 1. However, the thermal runaway prevention wall of Patent Literature 1 has complicated unique constitution because a secondary battery and a heat conducting tube are integrally formed, and moreover, fire spread to the plastic prevention wall itself is not taken into consideration.

In Patent Literature 2, a thermally expandable or thermosetting thermal runaway prevention sheet using a mineral-based powder or flame retardant is described. However, thermal management ability for a secondary battery cell has been regarded as performance necessary for improving cruising range, and a material satisfying both the improvement in thermal management ability and the aforesaid prevention of thermal runaway is desired. However, the thermal runaway prevention sheet described in Patent Literature 2 has a thermal conductivity of about 0.1 W/(m·K) at room temperature and does not meet the requirements.

For example, in Patent Literature 3 and Patent Literature 4, it is disclosed that it is effective to use, as materials having a low thermal conductivity, such bulky fine particles containing fine pores as listed in these patent literatures. In Patent Literature 3, a heat insulating sheet using an aerogel silica particle containing countless pores of several nm and a fiber is described, and this sheet is considered to have excellent heat insulating properties and excellent water resistance. In Patent Literature 4, a porous heat insulating material in which fumed silica or fumed alumina, each being a fine particle having a fine porous structure, and an inorganic fiber are combined is described, and this heat insulating material exhibits an extremely low thermal conductivity and heat resistance from room temperature up to 600°C.

However, the manufacturing cost of the aerogel that is said to have a porosity of 90% or more is high, and it is known that the aerogel greatly contracts when the temperature becomes 500°C or higher, so that when this technique is applied between cells, there is a problem with the shape retention ability at the time of thermal runaway. On the other hand, the fumed silica and the fumed alumina are excellent in heat resistance, but because of fine particles, they easily fly and are difficult to be formed. On this account, there is a problem also with formability, and there is a problem also with handling properties such as easy occurrence of dust fall.

As analogous material composition, a nonwoven sheet composed of inorganic particles and fine cellulose fibers and having heat resistance and high strength is described in Patent Literature 5. However, use as a separator is taken into consideration for this nonwoven sheet, and the sheet has air permeability and liquid permeability, so that there is a problem with heat insulating properties and flame shielding performance.

In Patent Literature 6, a heat insulating material using a fiber body filled with a compression formed body of nanoparticles is described. However, the thickness of the heat insulating material described is at least 1 mm or more, and in order to ensure strength, coating layers need to be further provided on both surfaces. Moreover, fumed silica and an aerogel described in Patent Literature 6 exhibit volume recovery behavior called spring back when forming is carried out by compression, so that it is difficult to control the thickness.

Citation List

Patent Literature

Patent Literature 1
Japanese Patent No. 4958409
Patent Literature 2
Japanese Patent Laid-Open No. 2018-206605
Patent Literature 3
Japanese Patent No. 6188245
Patent Literature 4
Japanese Patent No. 5683739
Patent Literature 5
Japanese Patent Laid-Open No. 2015-014078
Patent Literature 6
Japanese Patent No. 5615514

Summary of Invention

Technical Problem

In the conventional techniques described above, heat insulating materials cannot have excellent heat insulating properties and heat resistance together with performance capable of forming a material with thin shape, light mass, and sufficient strength and flexibility. On this account, a novel material that meets these requirements at the same time is desired.

Solution to Problem

In the light of the above problem and background, the present inventors have earnestly studied, and as a result, they have found that the above problem is solved by a heat insulating material composition comprising a composite of an amorphous silica particle manufactured by a wet process (also referred to as a "wet silica particle" in the present specification) and a microfibrillated cellulose fiber (also referred to as a "cellulose microfibril" in the present specification). That is to say, according to the embodiments of the present invention, the following aspects can be provided.

[1] A heat insulating material composition, comprising:
a composite in which cellulose microfibrils enclose wet silica particles having an average particle diameter of 1 $\mu$m or more and 50 $\mu$m or less.
[2] The heat insulating material composition according to [1], wherein a water content of the wet silica particles is 5% or more and 15% or less.
[3] A heat insulating material comprising the heat insulating material composition according to [1] or [2] and a base fiber.
[4] The heat insulating material according to [3], wherein the base fiber is one or more selected from the group consisting of a PET fiber, a cellulose fiber, an aramid fiber, a polyimide fiber, a polycarbonate fiber, and an inorganic fiber.
[5] The heat insulating material according to [3] or [4], having a thermal conductivity of 0.07 W/(m·K) or less at 23°C.
[6] The heat insulating material according to any one of [3] to [5], wherein a heat insulating material surface has been subjected to flame-retardant treatment.
[7] A heat insulating sheet obtained by forming the heat insulating material according to any one of [3] to [6], for use between secondary battery cells or around secondary battery cells of a battery structure having a plurality of secondary battery cells.
[8] A method for manufacturing the heat insulating material according to any one of [3] to [6], comprising the steps of:

mixing a heat insulating material composition and base fibers to obtain a slurry,
subjecting the slurry to sheet forming by a papermaking screen to obtain a raw material sheet, and
drying the raw material sheet to obtain a sheet-like heat insulating material.

[9] A battery structure, comprising:

a plurality of secondary battery cells; and
the heat insulating sheet according to [7] arranged between the secondary battery cells and/or around the secondary battery cells.

Advantageous Effect of Invention

According to the present invention, an excellent heat insulating property can be provided.

Brief Description of Drawings

[Figure 1] Figure 1 is a schematic cross-sectional view showing a battery structure according to a certain embodiment.
[Figure 2] Figure 2 is a schematic cross-sectional view showing a battery structure according to another embodiment.
[Figure 3] Figure 3 is an optical micrograph of a heat insulating sheet prepared in Example at a magnification of 200x.
[Figure 4] Figure 4 is a scanning electron micrograph of a heat insulating sheet prepared in Example at a magnification of 2000x.

Description of Embodiments

The present invention will be described in detail hereinafter. In the present specification, the numerical value range is a range including its lower limit and upper limit unless otherwise noted.

[1. Heat insulating material composition]

The heat insulating material composition according to a first embodiment of the present invention comprises a composite composed of amorphous silica particles manufactured by a wet process (hereinafter, wet silica particles) and cellulose microfibrils.
It is presumed that in the embodiment, specifically, by including hydrophilic wet silica particles with cellulose microfibrils to form a composite, a fine pore structure formed is maintained also before and after drying, and a low thermal conductivity is shown. Moreover, it has been found that the wet silica particles have a higher bulk specific gravity as compared with bulky porous fine particles typified by fumed silica, are excellent in handling properties, and form a composite in water, so that scattering and spouting of a powder during the process are suppressed.
The "wet silica" or the "wet silica particle" mentioned in the present specification refers to a particle of amorphous silica manufactured by a method for synthetically manufacturing an amorphous silica substance in a liquid phase (that is, wet process). As the wet process, for example, any of precipitation method, gel method, and a method using a known liquid phase may be included. The precipitation method refers to, for example, a method in which an aqueous solution of sodium silicate is neutralized to precipitate silica, and the silica is take by filtering and dried. The amorphous silica manufactured by such a wet process is a particle (preferably fine particle) containing fine pores, and it gives a fine porous structure to the heat insulating material composition.
Water contained in the wet silica improves heat resistance of the heat insulating material composition and plays a role of suppressing van der Waals force acting on particles. The water content is preferably 5 mass% or more and 15 mass% or less based on the mass of the whole wet silica. When the water content is 5 mass% or more, adhesion properties due to static electricity acting on particles do not become too high, and therefore, good handling properties may be shown. On the other hand, a water content of 15 mass% or less is preferable because the thermal conductivity does not become too high.
The wet silica particles are heated up to 200°C by a thermogravimetric analyzer (TGA), and a water content W is calculated using a mass X before heating and a mass decrease $X_1$. That is to say, the mass decrease $X_1$ is regarded as an amount of water.

$$\text{Water content W (mass\%)} = (X_1/X) \times 100$$

The average particle diameter of the wet silica is in the range of 1 $\mu$m to 50 $\mu$m. The average particle diameter may be measured as a 50% integrated particle diameter $D_{50}$ using a laser diffraction particle size measuring device ("Model LS-230" manufactured by Beckman Coulter, Inc.). An average particle diameter of less than 1 $\mu$m is undesirable

because the wet silica particles may not sufficiently come into contact with cellulose microfibrils, and a porous structure necessary for the composite after inclusion to show heat insulating properties may not be formed, so that the heat insulating properties are deteriorated. On the other hand, if the average particle diameter is more than 50 μm, the composite formed becomes coarse, so that strength of the heat insulating material may not be obtained.

The bulk density (specifically bulk density measured by tap method according to ISO 787-11) of the wet silica is not particularly limited, but from the viewpoints of improvement in fluidity and suppression of spouting, the bulk density is preferably 50 g/L or more. When the bulk density is 50 g/L or more, an effect of facilitating control of handling properties is obtained.

The term "cellulose microfibril" or "microfibrillated cellulose fiber" mentioned in the present specification means a microfiber obtained by treating a cellulose fiber having a high crystallinity with a high-pressure homogenizer or a grinder, etc. and thereby highly fibrillating the fiber. The cellulose microfibril has an extremely small fiber diameter as compared with a usual cellulose fiber, and on this account, it has a high specific surface area, and a larger number of hydrogen-bonding functional groups derived from cellulose molecules are exposed, so that the adsorption power is extremely increased. The present inventors have found that this cellulose microfibril interacts with the wet silica particle to exhibit good adsorptivity, and the cellulose microfibril may strongly include the wet silica particle while maintaining fine pores of the particle and may prepare a composite that favorably functions as a heat insulating material composition.

The cellulose microfibril may be evaluated using, for example, a measuring device L&W Fiber Tester Plus (manufactured by ABB AB). In the present specification, "cellulose microfibril" or "microfibrillated cellulose fiber" is defined as a substance which satisfies the following conditions:

(1) an average fiber length of fibers having fiber lengths of 100 μm or more is 0.1 to 1.0 mm,
(2) a ratio of fine matters of less than 100 μm is 30% or more, and more preferably 30 to 70%,
(3) UV/IR, the ratio of scattering intensity of ultraviolet ray to that of infrared ray, is 1.5 or more, each being measured by such a measuring device as above, and
(4) a viscosity of a dispersion at a concentration of 1 mass%, as measured by a B-type viscometer, is 500 cp or more.

The fiber diameter of the cellulose microfibril is, for example, 10 μm or less, and may be preferably 1 nm to 5 μm. The fiber length of the cellulose microfibril is not particularly limited as long as the heat insulating properties and dispersibility are not impaired.

The mixing ratio between the wet silica particles and the microfibrillated cellulose fibers depends on the particle diameters of the wet silica particles used, the fiber lengths of the microfibrillated cellulose fibers used, etc., so that it is not particularly limited as long as the heat insulating properties are not impaired, but the amount of the microfibrillated cellulose fibers is preferably about 5 to 50 parts by mass, in terms of solid content, based on 100 parts by mass of the wet silica particles.

The method for manufacturing the heat insulating material composition according to the embodiment of the present invention is, for example, a method including dispersing amorphous wet silica and cellulose microfibrils in water and adding a flocculant to obtain a composite dispersion. The composite dispersion obtained by this manufacturing method may be used as a solid after dried, and may be used as a powder among the solids.

As the flocculant, an arbitrary compound known in the relevant technical field may be used, and for example, an ionic flocculant (cationic flocculant, anionic flocculant, nonionic flocculant, amphoteric flocculant, or the like) may be used. Examples of the flocculants include phosphates, borates, ionic acrylamide, and polyethylene oxide.

[2. Heat insulating material]

In the embodiment, the heat insulating material is obtained by compounding, as a raw material, the already-described heat insulating material composition containing a composite. For example, the heat insulating material may be a layer (heat insulating layer) obtained by using the already-described heat insulating material composition as a raw material and filling a space with the heat insulating material composition utilizing fluidity of the composition. Alternatively, the heat insulating material may be obtained by a sheet forming method.

In a certain embodiment, the heat insulating material preferably further comprises a base fiber in addition to the heat insulating material composition. Such a base fiber is preferably one or more fibers selected from the group consisting of a PET fiber, a cellulose fiber, an aramid fiber, a polyimide fiber, a polycarbonate fiber, and an inorganic fiber from the viewpoint of heat resistance. From the viewpoint of flame resistance, a base fiber having been subjected to flame-retardant treatment may be used. These fibers have a role of imparting tensile strength and flexibility to the heat insulating material. Examples of the cellulose fibers include wood pulp, non-wood pulp, and regenerated cellulose, but an arbitrary fiber may be used. Typical examples of the inorganic fibers include a silica fiber that is an artificial fiber excellent in heat resistance, an alumina-silica fiber, a glass fiber, a zirconia fiber, a silicon carbide fiber, rockwool manufactured using a mineral as a raw material, and wollastonite and sepiolite that are natural minerals, and one or a plurality of these fibers may be used according to the needs.

The average fiber length and the average fiber diameter of the base fibers or the microfibrillated cellulose fibers are each an average value of diameters of 100 fibers confirmed by scanning electron microscope (SEM) observation. The average fiber length and the average fiber diameter sometimes vary depending on the quality of the material used, but they are not particularly limited as long as the heat insulating properties and the formability of the heat insulating material are not impaired. The average fiber diameter of the base fibers is preferably 1 to 50 $\mu$m, and more preferably 5 to 30 $\mu$m.

The content of the base fibers is preferably 300 parts by mass or less based on 100 parts by mass of the composite composed of the wet silica particles and the microfibrillated cellulose fibers (solids), but it is not particularly limited to this as long as the heat insulating properties and the formability are not impaired. The amount in part(s) by mass of the composite composed of the wet silica particles and the microfibrillated cellulose fibers (solids) may be calculated from the total of the amount in part(s) by mass of the wet silica particles and the amount in part(s) by mass of the microfibrillated cellulose fibers (solids). When the content of the base fibers is 300 parts by mass or less, the contact area between the base fibers decreases, and the heat insulating material shows heat insulating properties. The content of the base fibers is preferably 1 part by mass or more based on 100 parts by mass of the composite composed of the wet silica particles and the microfibrillated cellulose fibers.

The method for manufacturing the heat insulating material in the present invention is not particularly limited, as previously stated, but when the heat insulating material is applied to a secondary battery cell described later, forming into a thin sheet by a sheet forming method is preferable from the viewpoints of reduction of surplus space and weight saving. The method for manufacturing the heat insulating material using such a sheet forming method preferably comprises a step of mixing the aforesaid heat insulating material composition and base fibers to obtain a slurry, a step of subjecting the slurry to sheet forming by a papermaking screen to obtain a raw material sheet, and a step of drying the raw material sheet to obtain a sheet-like heat insulating material. The "raw material sheet" mentioned herein refers to a sheet-like intermediate (containing a large amount of water) before drying, which is obtained by subjecting the raw material to sheet forming. In the drying, for example, a yankee dryer may be used. When the thermal conductivity of the heat insulating material is 0.07 W/(m·K) or less at 23°C, the heat insulating material shows effective heat insulating properties even if it has a thin shape, so that such a thermal conductivity is preferable.

Flame-retardant treatment (flame proofing) of a heat insulating material surface may be carried out. Examples of flame-retardant treatment agents include a bromine-based compound, a chlorine-based compound, a phosphorus-based compound, a boron-based compound, and a silicone-based compound, but the flame-retardant treatment agent is not limited to them as long as it contributes to flame retardance.

[3. Heat insulating sheet]

The heat insulating sheet in the embodiment is obtained by processing the already-described heat insulating material into a sheet. The heat insulating material may be used as it is, but it may be processed into a heat insulating sheet that has been enhanced in flame retardance by using the already-described flame-retardant fibers (flameproofed fibers or inorganic fibers) as the base fibers or subjecting the surface to flame-retardant treatment or flameproofing to improve flame resistance and heat resistance. By arranging the heat insulating sheet on the periphery of each cell in a battery structure having a plurality of secondary battery cells, for example, between the cells or around the cells, excellent heat insulating properties and heat resistance may be imparted to the battery structure.

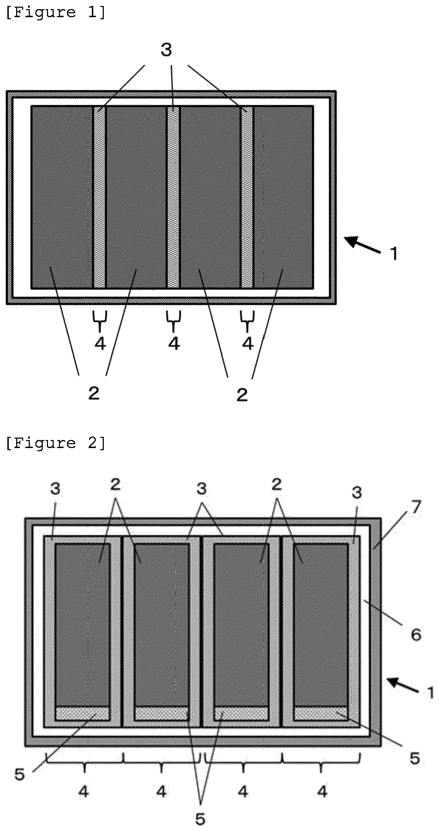

Examples of the embodiments shown in Figure 1 and Figure 2 will be described.

A battery structure 1 of Figure 1 has a plurality of secondary battery cells 2 and a fire spread prevention heat insulating layer 4 between the secondary battery cells. The fire spread prevention heat insulating layer 4 includes a heat insulating sheet 3. As the heat insulating sheet 3, the heat insulating sheet according to the already-described embodiment may be used, and owing to its excellent heat insulating properties, the heat insulating sheet has functions of inhibiting transfer of heat generated in each secondary battery cell 2 to the adjacent cell, suppressing thermal runaway attributable to use of a plurality of cells, and suppressing occurrence of a chain reaction of thermal runaway by heat resistance and heat insulating properties even if thermal runaway occurs.

A battery structure 1 of Figure 2 further has a cooling system 5 equipped with a pipe through which water or a cooling medium flows, in addition to a plurality of secondary battery cells 2 and a fire spread prevention heat insulating layer 4 (including heat insulating sheet 3) between the secondary battery cells, the cells and the layer being the same as those in Figure 1. The fire spread prevention heat insulating layer 4 is also made to surround the circumference of the secondary battery cell 2. In the embodiment of Figure 2, the circumference of each secondary battery cell 2 is thermally insulated, and therefore, the heat insulating sheet 3 not only suppresses thermal runaway but also makes cooling by the cooling system 5 more effective, so that the thermal management ability for the secondary battery cell 2 is improved. Moreover, the secondary battery cell 2 can be thermally protected from heat generated outside the battery structure 1, and as a result, heat resistance of the whole battery structure 1 is improved. In the example of Figure 2, a space 6 is provided between the fire spread prevention heat insulating layer 4 surrounding the circumference of the secondary battery cell 2 and a housing 7, and it contributes to heat blocking. The housing 7 refers to a housing for encasing, for example, a plurality of secondary battery cells 2 and a fire spread prevention heat insulating layer 4 (including heat insulating sheet 3) between the secondary battery cells. In another example, the space 6 does not need to be provided if cooling by the cooling system 5 is sufficiently effective.

Use of the heat insulating sheet according to the embodiment of the present invention is not limited to the above secondary batteries, and the sheet may be used also for, for example, flameproofing materials or heat insulating materials of buildings.

Hereinafter, the contents will be described in more detail with reference to experimental examples and comparative examples, but the present invention is in no way limited to them.

Examples

[Experimental Example 1]

To 84 parts by mass of pure water, 16 parts by mass of a wet silica powder was added, they were mixed for 2 hours in Homo Mixer manufactured by Tokushu Kika Kogyo Co., Ltd., and then 5.5 parts by mass of cellulose microfibrils (solids) and a flocculant were added, thereby obtaining a heat insulating material composition dispersion.

To the above dispersion, 32 parts by mass of base fibers (148 parts by mass based on 100 parts by mass of the total of the wet silica particles and the microfibrillated cellulose fibers (solids)) were added, and they were mixed for one hour in the above mixer, thereby preparing a heat insulating material slurry. The heat insulating material slurry was subjected to sheet forming by a papermaking screen and dried with a yankee dryer to prepare a heat insulating sheet having a thickness of 0.2 mm.

In the manufacture of the heat insulating sheet by the above method, the following wet silica powders having different particle diameters and water contents were used, and thermal conductivities, tensile strengths, and flexibilities of the resulting heat insulating sheets were measured. The results obtained are set forth in Table 1. The materials used are as follows.

(Materials used)

Wet silica 1 (W1): average particle diameter 49 μm, water content 8.3 mass%, amorphous
Wet silica 2 (W2): average particle diameter 15 μm, water content 8.0 mass%, amorphous
Wet silica 3 (W3): average particle diameter 1.8 μm, water content 8.0 mass%, amorphous
Wet silica 4 (W4): average particle diameter 15 μm, water content 14.7 mass%, amorphous
Wet silica 5 (W5): average particle diameter 15 μm, water content 5.4 mass%, amorphous
Wet silica 6 (W6): average particle diameter 120 μm, water content 5.8 mass%, amorphous

As the wet silica particles, those having been controlled in the average particle diameter by synthesizing the particles by a precipitation method and classifying them with a sieving machine and having been controlled in the water content by changing the drying time were used. The average particle diameter was measured as a 50% integrated particle diameter $D_{50}$ defined by a laser diffraction particle size measuring device ("Model LS-230" manufactured by Beckman Coulter, Inc.). The water content was measured as a mass decrease ratio at the time of 105°C using a differential thermogravimetric analyzer TG-DTA 2000SR (trade name, Bruker AXS GmbH).

Cellulose microfibrils: Celish KY100G (trade name, manufactured by Daicel FineChem Ltd.), solid content 10 mass%
Average fiber length of fibers having fiber lengths of 100 μm or more: 0.24 mm
Ratio of fine matters of less than 100 μm: 60.2%
UV/IR (ratio of scattering intensity of ultraviolet ray to that of infrared ray): 2.32
Viscosity of dispersion at 1 mass% concentration measured by B type viscometer: 850 cp
Average fiber diameter: 0.3 μm
Base fibers: PET fibers (average fiber diameter 20 μm)

(Evaluation method)

Thermal conductivity: A heat insulating sheet (thickness 0.2 (mm)) prepared was processed into a size of 10 mm × 10 mm, and a thermal resistance value θ (K/W) was measured at 23°C by a steady state method using a thermal resistance measuring device (manufactured by Hitachi Technologies and Service, Ltd.). Using this measured value, a thermal conductivity λ (W/(m·K)) was calculated from the following equation.

$$\lambda = 0.2/(10\times10\times\theta)10^3$$

Tensile strength: Using a Tensilon universal testing machine (manufactured by A&D Company, Ltd.), a tensile strength was measured at a tension rate of 10 mm/min and a distance between chucks of 200 mm.
Flexibility: The sheet was bent with a curvature radius of 10 mm in such a manner that the inside of the sheet made an angle of 120 degrees about the center of the sheet as a fulcrum, and when cracks did not occur on the surface of the sheet upon visual observation and the sheet returned to its original shape, the flexibility was evaluated as circle (good), and when the sheet did not satisfy the conditions, the flexibility was evaluated as X-mark (NG).

[Comparative Example 1 (Experiment No. 1-7)]

Using amorphous silica particles manufactured by a dry process (hereinafter, dry silica particles) instead of the wet silica particles, a heat insulating sheet was prepared in the same manner as in Experimental Example 1.

(Materials used)

Dry silica particles (D1): average particle diameter 0.20 μm, water content 0.9 mass%

[Comparative Example 2]

Using the following control cellulose fibers that had not been microfibrillated instead of the cellulose microfibrils, preparation of a heat insulating sheet was attempted in the same manner as in Experimental Example 1, but composite formation with the wet silica particles was not able to be carried out, and a sheet was not obtained.

Control cellulose fibers
Average fiber length of fibers having fiber lengths of 100 μm or more: 0.74 mm
Ratio of fine matters of less than 100 μm: 9.8%
UV/IR (ratio of scattering intensity of ultraviolet ray to that of infrared ray): 0.86
Viscosity of dispersion at 1 mass% concentration measured by B type viscometer: 15 cp

[Table 1]

| Experiment No. | Amorphous silica particles | Thermal conductivity [W/(m·K)] | Tensile strength [N] | Flexibility | Remarks |
|---|---|---|---|---|---|
| 1-1 | W1 | 0.04 | 26 | ○ | Example |
| 1-2 | W2 | 0.04 | 26 | ○ | Example |
| 1-3 | W3 | 0.04 | 26 | ○ | Example |
| 1-4 | W4 | 0.05 | 26 | ○ | Example |
| 1-5 | W5 | 0.05 | 26 | ○ | Example |
| 1-6 | W6 | 0.06 | 1.3 | × | Comparative Example |
| 1-7 | D1 | 0.09 | 1.3 | × | Comparative Example |

From Table 1, it can be seen that by using wet silica having a prescribed average particle diameter, the heat insulating sheets showed excellent heat insulating properties of 0.07 W/(m·K) or less though they were thin films. The sheets prepared had flexibility standing comparison with that of a usual pulp paper, and did not suffer dust fall of silica particles, etc. On the other hand, it can be seen that when dry silica particles having a too small average particle diameter were used, the effect of reducing thermal conductivity was decreased, but even in the case of wet silica particles, when they had a too large average particle diameter, sufficient sheet strength was not obtained.

[Experimental Example 2]

Heat insulating sheets were prepared in the same manner as in Experimental Example 1, except that the base fibers were changed to silica fibers, and thermal conductivity, tensile strength and flexibility were evaluated in the same manner.

Base fibers: silica fibers (average fiber diameter 20 μm)

[Table 2]

| Experiment No. | Amorphous silica particles | Thermal conductivity [W/ (m·K)] | Tensile strength [N] | Flexibility | Remarks |
|---|---|---|---|---|---|
| 2-1 | W1 | 0.04 | 21 | ○ | Example |
| 2-2 | W2 | 0.04 | 21 | ○ | Example |
| 2-3 | W3 | 0.04 | 21 | ○ | Example |
| 2-4 | W4 | 0.05 | 21 | ○ | Example |
| 2-5 | W5 | 0.05 | 21 | ○ | Example |
| 2-6 | W6 | 0.06 | 1.3 | × | Comparative Example |
| 2-7 | D1 | 0.09 | 1.3 | × | Comparative Example |

From Table 2, it can be seen that by using wet silica having a prescribed average particle diameter, the heat insulating sheets showed excellent heat insulating properties of 0.07 W/(m·K) or less though they were thin films. The sheets prepared had flexibility standing comparison with that of a usual pulp paper, and did not suffer dust fall of silica particles, etc. On the other hand, it can be seen that when dry silica particles having a too small average particle diameter were used, the effect of reducing thermal conductivity was decreased, but even in the case of wet silica particles, when they had a too large average particle diameter, sufficient sheet strength was not obtained.

[Experimental Example 3]

Changing the base fibers, heat insulating sheets were prepared by the same manufacturing method as in Experimental Example 1, and thermal conductivity, tensile strength and flexibility were evaluated in the same manner.

(Materials used)

Wet silica: average particle diameter 15 μm, water content 8.0 mass%

Cellulose microfibrils: Celish KY100G (trade name, manufactured by Daicel FineChem Ltd.), solid content 10 mass%

Base fibers 1 (F1): PET fibers

Base fibers 2 (F2): cellulose fibers
Base fibers 3 (F3): polyimide fibers

Base fibers 4 (F4): polycarbonate fibers
Base fibers 5 (F5): aramid fibers
Base fibers 6 (F6): silica fibers

As all the above fibers, fibers having an average fiber diameter of 10 µm were used.

[Table 3]

| Experiment No. | Base fibers | Thermal conductivity [W/(m·K)] | Tensile strength [N] | Flexibility | Remarks |
|---|---|---|---|---|---|
| 3-1 | F1 | 0.04 | 26 | ○ | Example |
| 3-2 | F2 | 0.04 | 24 | ○ | Example |
| 3-3 | F3 | 0.04 | 21 | ○ | Example |
| 3-4 | F4 | 0.04 | 27 | ○ | Example |
| 3-5 | F5 | 0.04 | 28 | ○ | Example |
| 3-6 | F6 | 0.04 | 21 | ○ | Example |

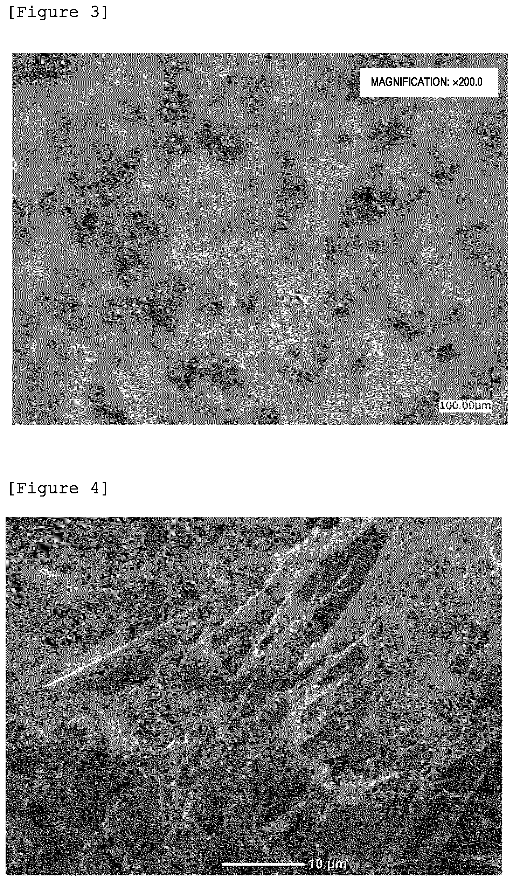

From Table 3, it can be seen that the heat insulating sheets according to the examples showed excellent heat insulating properties, flexibility and sheet strength independent of the type of the base fibers.
Regarding the heat insulating sheet of Experiment No. 3-6, a micrograph of Figure 3 was obtained through optical microscope observation, and a micrograph of Figure 4 was obtained through electron microscope observation. From Figure 3, it can be seen that the base fibers that look like translucent lines running vertically and horizontally are covered with a white cotton-like porous substance. From Figure 4, it can be seen that the porous substance is a composite in which the wet silica particles are included with a fiber substance that is obviously thin as compared with the base fibers (in Figure 4, the base fibers look like thick pillars running from top right to left bottom), namely cellulose microfibrils.

[Experimental Example 4]

Changing the amount of the cellulose microfibrils based on the amorphous silica particles, heat insulating sheets were prepared by the same manufacturing method as in Experimental Example 1, and thermal conductivity, tensile strength and flexibility were evaluated in the same manner.

(Materials used)

Wet silica: average particle diameter 15 µm, water content 8.0 mass%

Cellulose microfibrils: Celish KY100G (trade name, manufactured by Daicel FineChem Ltd.), solid content 10 mass%

Base fibers: PET fibers (average fiber diameter 10 µm)

[Table 4]

| Experiment No. | Amount of cellulose microfibrils (amount of solids based on 100 parts by mass of amorphous silica particles) | Thermal conductivity [W/(m·K)] | Tensile strength [N] | Flexibility | Remarks |
|---|---|---|---|---|---|
| 4-1 | 5 parts by mass | 0.04 | 26 | ○ | Example |
| 4-2 | 10 parts by mass | 0.04 | 26 | ○ | Example |
| 4-3 | 20 parts by mass | 0.04 | 26 | ○ | Example |
| 4-4 | 50 parts by mass | 0.05 | 26 | ○ | Example |

From Table 4, it can be seen that when the amount of the microfibrillated cellulose fibers was in the range of the present invention, the heat insulating sheets showed excellent heat insulating properties, flexibility and sheet strength.

[Experimental Example 5]

Changing the base fibers of Experimental Example 4 to silica fibers, heat insulating sheets were prepared, and thermal conductivity, tensile strength and flexibility were evaluated in the same manner.

(Materials used)

Wet silica: average particle diameter 15 $\mu$m, water content 8.0 mass%

Cellulose microfibrils: Celish KY100G (trade name, manufactured by Daicel FineChem Ltd.), solid content 10 mass%

Base fibers: silica fibers (average fiber diameter 10 $\mu$m)

[Table 5]

| Experiment No. | Amount of cellulose microfibrils (amount of solids based on 100 parts by mass of amorphous silica particles) | Thermal conductivity [W/(m·K)] | Tensile strength [N] | Flexibility | Remarks |
|---|---|---|---|---|---|
| 5-1 | 5 parts by mass | 0.04 | 21 | ○ | Example |
| 5-2 | 10 parts by mass | 0.04 | 21 | ○ | Example |
| 5-3 | 20 parts by mass | 0.04 | 21 | ○ | Example |
| 5-4 | 50 parts by mass | 0.05 | 21 | ○ | Example |

From Table 5, it can be seen that when the amount of the microfibrillated cellulose fibers was in the range of the present invention, the heat insulating sheets showed excellent heat insulating properties, flexibility and sheet strength also in the case of the silica fibers.

[Experimental Example 6]

Changing the amount of the base fibers based on the amorphous silica particles, heat insulating sheets were prepared by the same manufacturing method as in Experimental Example 1, and thermal conductivity, tensile strength and flexibility were evaluated in the same manner.

(Materials used)

Wet silica: average particle diameter 15 $\mu$m, water content 8.0 mass%

Cellulose microfibrils: Celish KY100G (trade name, manufactured by Daicel FineChem Ltd.), solid content 10 mass%

Base fibers: silica fibers (average fiber diameter 10 $\mu$m)

[Table 6]

| Experiment No. | Amount of base fibers (based on 100 parts by mass of the total of wet silica particles and microfibrillated cellulose fibers (solids)) | Thermal conductivity [W/(m·K)] | Tensile strength [N] | Flexibility | Remarks |
|---|---|---|---|---|---|
| 6-1 | 50 parts by mass | 0.03 | 18 | ○ | Example |
| 6-2 | 100 parts by mass | 0.04 | 21 | ○ | Example |
| 6-3 | 200 parts by mass | 0.04 | 30 | ○ | Example |
| 6-4 | 300 parts by mass | 0.06 | 38 | ○ | Example |

From Table 6, it can be seen that when the amount of the base fibers was in the range of the present invention, the heat insulating sheets showed excellent heat insulating properties, flexibility and sheet strength.

[Experimental Example 7]

Changing the base fibers of Experimental Example 6 to PET fibers, heat insulating sheets were prepared, and thermal conductivity, tensile strength and flexibility were evaluated in the same manner.

(Materials used)

Wet silica: average particle diameter 15 μm, water content 8.0 mass%

Cellulose microfibrils: Celish KY100G (trade name, manufactured by Daicel FineChem Ltd.), solid content 10 mass%

Base fibers: PET fibers (average fiber diameter 10 μm)

[Table 7]

| Experiment No. | Amount of base fibers (based on 100 parts by mass of the total of wet silica particles and microfibrillated cellulose fibers (solids)) | Thermal conductivity [W/(m·K)] | Tensile strength [N] | Flexibility | Remarks |
|---|---|---|---|---|---|
| 7-1 | 50 parts by mass | 0.03 | 18 | ○ | Example |
| 7-2 | 100 parts by mass | 0.04 | 26 | ○ | Example |
| 7-3 | 200 parts by mass | 0.04 | 32 | ○ | Example |
| 7-4 | 300 parts by mass | 0.06 | 40 | ○ | Example |

From Table 7, it can be seen that when the amount of the base fibers was in the range of the present invention, the heat insulating sheets showed excellent heat insulating properties, flexibility and sheet strength.

[Experimental Example 8]

Using the heat insulating sheets obtained in Experimental Example 2, fire spread prevention performance (performance capable of preventing chain reaction of thermal runaway) was evaluated.

(Evaluation method)

Fire spread prevention performance: One test piece (length 100 mm, width 100 mm, thickness 1.0 mm) prepared from the resulting heat insulating sheet and one aluminum plate (length 100 mm, width 100 mm, thickness 1.0 mm) imitating an exterior material of a battery cell were prepared, and the test piece was screwed to the aluminum plate at the four corners to prepare a specimen. The specimen was heated from the test piece side with a burner flame at 900 to 1000°C for 10 minutes, and a case where even by the heating, the unheated surface temperature of the specimen was lower than 200°C, there was no penetration into the unheated surface, and there was no flaming was regarded as circle (good), and a case where any of these conditions was not satisfied was regarded as X-mark (NG), and thus, fire spread prevention performance to suppress a chain reaction of thermal runaway was evaluated.

[Table 8]

| Experiment No. | Amorphous silica particles | Flame resistance | Remarks |
|---|---|---|---|
| 8-1 | W1 | ○ | Example |
| 8-2 | W2 | ○ | Example |
| 8-3 | W3 | ○ | Example |
| 8-4 | W4 | ○ | Example |
| 8-5 | W5 | ○ | Example |
| 8-6 | W6 | × | Comparative Example |
| 8-7 | D1 | × | Comparative Example |

From Table 8, it can be seen that by using wet silica having a prescribed average particle diameter, the heat insulating sheets had flame resistance necessary for fire spread prevention. On the other hand, it can be seen that when dry silica particles having a too small average particle diameter were used, the effect of reducing thermal conductivity was decreased, but even in the case of wet silica particles, when they had a too large average particle diameter, a sheet having sufficient shape retention ability was not obtained, so that the fire spread prevention performance was insufficient.

Industrial Applicability

According to the present invention, a heat insulating material composition using amorphous wet silica particles with excellent handling properties and having excellent heat insulating properties can be provided. Moreover, a thin heat insulating sheet can also be easily provided by a sheet forming method. Since the heat insulating sheet has heat resistance, heat insulating properties and flexibility that are higher than before, it is applicable to various shapes, and therefore, it may impart excellent heat insulating properties and heat resistance not only to battery structures but also to buildings, pipes, etc. According to the present invention, excellent heat insulating properties and heat resistance may be imparted to a battery structure having a plurality of secondary battery cells.

Reference Signs List

1    Battery structure
2    Secondary battery cell
3    Heat insulating sheet
4    Fire spread prevention heat insulating layer
5    Cooling system
6    Space
7    Housing

**Claims**

1.  A heat insulating material composition, comprising:
    a composite in which cellulose microfibrils enclose wet silica particles having an average particle diameter of 1 $\mu$m or more and 50 $\mu$m or less.

2.  The heat insulating material composition according to claim 1, wherein a water content of the wet silica particles is 5% or more and 15% or less.

3. A heat insulating material comprising the heat insulating material composition according to claim 1 or 2 and a base fiber.

4. The heat insulating material according to claim 3, wherein the base fiber is one or more selected from the group consisting of a PET fiber, a cellulose fiber, an aramid fiber, a polyimide fiber, a polycarbonate fiber, and an inorganic fiber.

5. The heat insulating material according to claim 3 or 4, having a thermal conductivity of 0.07 W/(m·K) or less at 23°C.

6. The heat insulating material according to any one of claims 3 to 5, wherein a heat insulating material surface has been subjected to flame-retardant treatment.

7. A heat insulating sheet obtained by forming the heat insulating material according to any one of claim 3 to 6, for use between secondary battery cells or around secondary battery cells of a battery structure having a plurality of secondary battery cells.

8. A method for manufacturing the heat insulating material according to any one of claims 3 to 6, comprising the steps of:

mixing a heat insulating material composition and base fibers to obtain a slurry,
subjecting the slurry to sheet forming by a papermaking screen to obtain a raw material sheet, and
drying the raw material sheet to obtain a sheet-like heat insulating material.

9. A battery structure, comprising:

a plurality of secondary battery cells; and
the heat insulating sheet according to claim 7 arranged between the secondary battery cells and/or around the secondary battery cells.

[Figure 1]

[Figure 2]

[Figure 3]

[Figure 4]

## INTERNATIONAL SEARCH REPORT

| International application No. |
|---|
| PCT/JP2020/015580 |

A. CLASSIFICATION OF SUBJECT MATTER
H01M 10/613(2014.01)i; H01M 10/625(2014.01)i; H01M 10/647(2014.01)i; H01M 10/6556(2014.01)i; H01M 10/6567(2014.01)i; H01M 10/658(2014.01)i; H01M 8/04701(2016.01)i; F16L 59/02(2006.01)i
FI:    F16L59/02; H01M10/658; H01M10/613; H01M10/625; H01M10/647; H01M10/6556; H01M10/6567; H01M8/04701
According to International Patent Classification (IPC) or to both national classification and IPC

B. FIELDS SEARCHED

Minimum documentation searched (classification system followed by classification symbols)
H01M10/613; H01M10/625; H01M10/647; H01M10/6556; H01M10/6567; H01M10/658; H01M8/04701; F16L59/02

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2015-163815 A (OZONESAVE CO., LTD.) 10.09.2015 (2015-09-10) paragraphs [0016]-[0037] | 1-6, 8<br>7, 9 |
| Y | WO 2018/211906 A1 (PANASONIC IP MANAGEMENT CO., LTD.) 22.11.2018 (2018-11-22) paragraph [0013] | 7, 9 |
| A | JP 2014-35044 A (PANASONIC CORP.) 24.02.2014 (2014-02-24) paragraphs [0025], [0037]-[0039] | 1-9 |
| A | CN 203533093 U (SHANGHAI XINKUI TECHNOLOGY INC.) 09.04.2014 (2014-04-09) paragraphs [0028], [0031] | 1-9 |
| P, X | JP 2019-95046 A (TOKUSHU TOKAI PAPER CO., LTD.) 20.06.2019 (2019-06-20) paragraphs [0019]-[0020], [0024]-[0025], [0033]-[0034], [0048]-[0049] | 1-9 |

☒ Further documents are listed in the continuation of Box C.     ☒ See patent family annex.

| | |
|---|---|
| *   Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 10 June 2020 (10.06.2020) | 30 June 2020 (30.06.2020) |

| Name and mailing address of the ISA/<br>  Japan Patent Office<br>  3-4-3, Kasumigaseki, Chiyoda-ku,<br>  Tokyo 100-8915, Japan | Authorized officer<br><br>Telephone No. |
|---|---|

Form PCT/ISA/210 (second sheet) (January 2015)

**INTERNATIONAL SEARCH REPORT**

International application No.

PCT/JP2020/015580

C (Continuation).   DOCUMENTS CONSIDERED TO BE RELEVANT

| Category* | Citation of document, with indication, where appropriate, of the relevant passages | Relevant to claim No. |
|---|---|---|
| P, A | JP 2019-123983 A (NAGOYA INSTITUTE OF TECHNOLOGY) 25.07.2019 (2019-07-25) paragraph [0009] | 1-9 |
| P, X | JP 2020-20452 A (LIXIL CORPORATION) 06.02.2020 (2020-02-06) paragraphs [0019]-[0020], [0026], [0030]-[0031] | 1-2 |

Form PCT/ISA/210 (continuation of second sheet) (January 2015)

| International application No. |
| --- |
| PCT/JP2020/015580 |

| Patent Documents referred in the Report | Publication Date | Patent Family | Publication Date |
| --- | --- | --- | --- |
| JP 2015-163815 A | 10 Sep. 2015 | WO 2016/121372 A1<br>TW 201629184 A | |
| WO 2018/211906 A1 | 22 Nov. 2018 | US 2019/0178434 A1<br>paragraphs [0016]-[0020]<br>CN 109642697 A | |
| JP 2014-35044 A | 24 Feb. 2014 | (Family: none) | |
| CN 203533093 U | 09 Apr. 2014 | (Family: none) | |
| JP 2019-95046 A | 20 Jun. 2019 | (Family: none) | |
| JP 2019-123983 A | 25 Jul. 2019 | (Family: none) | |
| JP 2020-20452 A | 06 Feb. 2020 | (Family: none) | |

Form PCT/ISA/210 (patent family annex) (January 2015)

**EP 3 961 789 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4958409 B
- JP 2018206605 A
- JP 6188245 B
- JP 5683739 B
- JP 2015014078 A
- JP 5615514 B